# EUROPÄISCHE PATENTSCHRIFT

(11) **EP 0 846 307 B1**
(45) Veröffentlichungstag und Bekanntmachung des Hinweises auf die Patenterteilung: **27.10.1999**
(21) Anmeldenummer: 96929324.0
(22) Anmeldetag: 23.08.1996
(51) Int. Cl.: G06K 19/07, G06K 7/00

(54) **CHIPKARTE**
CHIP CARD
CARTE A PUCE

(30) Priorität: 25.08.1995 DE 19531372
(43) Veröffentlichungstag der Anmeldung: 10.06.1998
(60) Teilanmeldung: 98119306.3
(73) Patentinhaber: SIEMENS AKTIENGESELLSCHAFT, 80333 München (DE); Philips Semiconductors Gratkorn GmbH, 8101 Gratkorn (AT); Koninklijke Philips Electronics N.V., 5621 BA Eindhoven (NL)
(72) Erfinder: BERGER, Dominik, A-8045 Graz (AT); EBER, Wolfgang, A-8047 Graz (AT); HOLWEG, Gerald, A-8045 Graz (AT); FIBRANZ, Heiko, D-81377 München (DE); REINER, Robert, D-82008 Unterhaching (DE); SCHRAUD, Gerhard, D-86415 Mering (DE); STRUBEL, Walter, D-82229 Seefeld (DE); WEITZEL, Joachim, D-85229 Markt Indersdorf (DE)
(74) Vertreter: Epping, Wilhelm, Dr.-Ing.
(86) Internationale Anmeldenummer: EP9603745
(87) Internationale Veröffentlichungsnummer: WO9708651

(56) Entgegenhaltungen:
- EP-A- 0 296 414
- EP-A- 0 491 639
- EP-A- 0 534 559
- DE-C- 3 935 364

## Beschreibung

Die Erfindung betrifft eine Chipkarte mit einem zumindest einen Speicher enthaltenden Halbleiterchip, bei der zur Energieversorgung des Chips und zur bidirektionalen Datenübertragung von und zum Chip sowohl Kontakte als auch Mittel zur kontaktlosen Datenübertragung vorgesehen sind, wobei auf dem Chip ein ansteuerbares Schaltmittel vorgesehen ist, das den Speicher in Abhängigkeit vom Zustand des Ausgangssignals einer mit zumindest dem Spannungsversorgungskontakt verbundenen logischen Schaltung mit den Kontakten oder mit Mitteln zur kontaktlosen Datenübertragung verbindet.

Eine solche Chipkarte ist bereits aus der EP 0 424 726 A1 bekannt. Dort ist die logische Schaltung mit einem Komparator gebildet, dessen einer Eingang mit dem Versorgungsspannungskontakt verbunden ist. Der andere Eingang des Komparators ist über ein Gleichrichter- und Glättungsnetzwerk mit Spulen zur kontaktlosen Energie- und Datenübertragung verbunden. Der Ausgang des Komparators steuert abhängig von den an seinen beiden Eingängen anliegenden Spannungen einen Multiplexer an, der abhängig vom Zustand des Ausgangssignals des Komparators entweder die Versorgungsspannung und die Signale von den Kontakten oder die Versorgungsspannung und Signale, die aus dem von den Spulen empfangenen Signal abgeleitet wurden zu einem ebenfalls mit dem Multiplexer verbundenen Mikroprozessor mit zugehörigem Speicher durchschaltet.

Bei der bekannten Chipkarte ist also eine selbstätige Umschaltung entweder auf die Kontakte oder auf die Spulen möglich, je nachdem, woher die Chipkarte eine Versorgungsspannung erhält. Nachteilig bei dieser Lösung ist jedoch, daß der Speicher immer mit der Eingangs/Ausgangsschnittstelle verbunden wird, die die höhere Versorgungsspannung liefert. Dadurch könnte, selbst wenn die Chipkarte in einem kontaktbehafteten Lesegerät steckt, durch Anlegen eines starken elektromagnetischen Feldes der Multiplexer umgeschaltet werden und somit ein Mißbrauch ermöglicht sein. Dies ist vor allem deshalb problematisch, weil bei solchen kombinierten Karten, bei denen Energie- und Datenübertragung sowohl über Kontakte als auch kontaktlos über Spulen erfolgen kann und die als Debitkarten eingesetzt werden, eine Entwertung der Karte normalerweise über den kontaktlosen Übertragungsweg erfolgt, während eine Aufwertung der Karte über den kontaktbehafteten Übertragungsweg erfolgt. Hierin besteht ein Anreiz für Betrüger, die Karte zu manipulieren, während sie zur Aufladung in einem kontaktbehafteten Lesegerät steckt.

Die Aufgabe vorliegender Erfindung ist es somit, eine gattungsgemäße Chipkarte derart weiterzubilden, daß ein solcher Mißbrauch nicht möglich ist.

Die Aufgabe wird bei einer gattungsgemäßen Chipkarte dadurch gelöst, daß das Schaltmittel eine Ruhestellung einnimmt, wenn es nicht angesteuert ist und in dieser Ruhestellung den Speicher mit den Mitteln zur kontaktlosen Datenübertragung verbindet und nur bei Anliegen einer Spannung am Versorgungsspannungskontakt, angesteuert von der logischen Schaltung, die Kontakte mit dem Speicher verbindet.

Bei der erfindungsgemäßen Chipkarte gibt es also zu jeder Zeit eine eindeutige Schaltung auf Kontakt- bzw. Kontaktlosbetrieb. Damit sind Störungen durch gleichzeitige Versorgung über ein elektromagnetisches Feld bei Kontaktbetrieb ausgeschlossen. Ein weiterer Zuwachs an Sicherheit ist dadurch gegeben, daß es nicht möglich ist, den Zugang zu einem Speicherbereich über Kontakte zu erlangen und dann mit kontaktlosem Betrieb Operationen durchzuführen, die normalerweise bei kontaktlosem Betrieb nicht möglich wären. Es gibt kein Umschaltsignal, um vom Kontaktbetrieb wieder in den Kontaktlosbetrieb zu gelangen. Dies ist nur durch das Abschalten der Versorgungsspannung an den Kontakten möglich.

Zur weiteren Erhöhung der Sicherheit vor Mißbrauch wird bei einer vorteilhaften Weiterbildung der Erfindung die logische Schaltung auch mit dem Taktsignalkontakt verbunden. Die logische Schaltung ist dabei derart ausgebildet, daß sie die Schaltmittel nur ansteuert, wenn sowohl eine Versorgungsspannung als auch ein Taktsignal an den Kontakten anliegt.

In besonders vorteilhafter Weise wird für die logische Schaltung ein Mikroprozessor verwendet. Dadurch können weitere Sicherheitsfunktionen eingeführt werden.

Besonders vorteilhaft ist es, zusätzlich zur Versorgungsspannung und einem Taktsignal auch noch ein Datensignal zu dem Mikroprozessor zu übertragen, so daß dieser den Schalter erst dann aus der Ruhestellung umschaltet, wenn diese drei Bedingungen gleichzeitig erfüllt sind. Das Datensignal kann hierbei beispielsweise ein Befehl sein, der den Mikroprozessor veranlaßt, den Schalter umzuschalten. Es kann aber auch eine persönliche Identifikationsnummer, eine sogenannte PIN sein, die im Mikroprozessor mit einer dort gespeicherten Zahl verglichen wird. Ein Umschalten des Schalters ist dann erst möglich, wenn ein positiver Vergleich stattgefunden hat. Durch die Verwendung eines Mikroprozessors sind natürlich auch andere Authentifizierungsmöglichkeiten denkbar.

Eine besonders hohe Sicherheit ist gegeben, wenn der Speicher nur über den Mikroprozessor mit den Kontakten verbindbar ist.

Eine weitere Erhöhung der Sicherheit erfolgt dadurch, daß der Speicher nur über einen von der logischen Schaltung ansteuerbaren Schalter mit dem Versorgungsspannungskontakt verbindbar ist.

Die Erfindung soll nachfolgend anhand eines Ausführungsbeispiels mit Hilfe einer Figur näher erläutert werden.

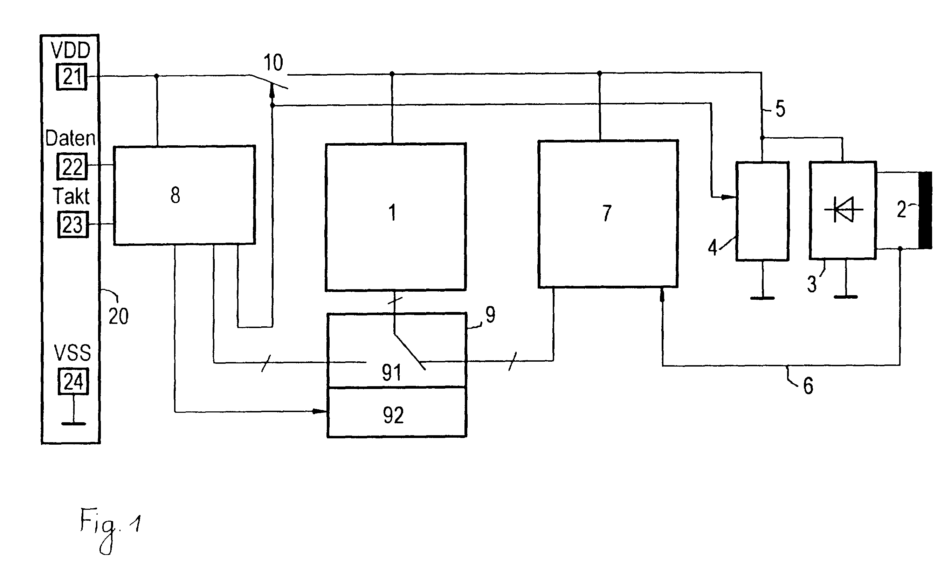

Bei der in der Figur dargestellten Prinzipschaltung ist ein Speicher 1 mit einer Spule 2 verbunden. Von der Spule 2 wird über eine erste Leitung 6 das empfangene hochfrequente Signal einer Verarbeitungsschaltung 7 zugeführt, die daraus den Takt und die Daten gewinnt und dem Speicher 1 über ein Schaltmittel 9 zuführt. Das Schaltmittel 9 nimmt eine Ruhestellung ein, in der der Schalter 91 des Schaltmittels 9 den Speicher 1 ständig über die Verarbeitungsschaltung 7 mit der Spule 2 verbindet.

Von der Spule 2 wird mittels einer Gleichrichter- und Glättungsschaltung 3 sowie einer Regelschaltung 4 eine Versorgungsspannung abgeleitet, die über eine Leitung 5 sowohl an die Verarbeitungsschaltung 7 als auch an den Speicher 1 angelegt ist.

Ein Steuerteil 92 des Schaltmittels 9 kann von einer logischen Schaltung 8, die in vorteilhafter Weise durch einen Mikroprozessor gebildet ist, angesteuert werden, so daß der Schalter 91 den Speicher 1 über den Mikroprozessor 8 mit Kontakten 20 verbindet. Diese Umschaltung kann jedoch nur erfolgen, wenn eine Versorgungsspannung VDD an einem Versorgungsspannungskontakt 21 der Kontakte 20 anliegt und den Mikroprozessor 8 versorgt.

Das Schaltmittel 9 kann nur vom Mikroprozessor 8 angesteuert werden, so daß es nicht möglich ist, durch Signale an der Spule 2, den Schalter 91 wieder in seine Ruhestellung zu bringen, so daß der Speicher 1 wieder mit der Spule 2 verbunden ist. Dies ist nur möglich, wenn keine Versorgungsspannung VDD mehr am Mikroprozessor 8 anliegt.

Der Mikroprozessor 8 kann derart ausgebildet sein, daß eine Ansteuerung des Schaltmittels 9 nur dann erfolgt, wenn außer der Versorgungsspannung VDD an einem Taktsignalkontakt 23 ein Taktsignal anliegt.

In weiterer vorteilhafter Ausgestaltung der Erfindung gibt der Mikroprozessor 8 erst dann ein Steuersignal an das Schaltmittel 9, wenn vorher ein Datensignal über einen Datenkontakt 22 übertragen wurde. Durch diese Maßnahme kann dafür gesorgt werden, daß ein Verändern der im Speicher 1 abgespeicherten Daten über den Mikroprozessor 8 erst möglich ist, nachdem ein spezielles Datensignal über den Datenkontakt 22 zum Mikroprozessor 8 übertragen wurde.

Es ist weiterhin ein Schalter 10 vorgesehen, der die am Versorgungsspannungskontakt 21 anliegende Versorgungsspannung VDD erst dann an den Speicher anlegt, wenn er durch ein entsprechendes Signal vom Mikroprozessor 8 angesteuert wurde. Dieses Steuersignal kann natürlich gleich dem Steuersignal für den Steuerteil 92 des Schaltmittels 9 sein.

Dieses Steuersignal kann noch zu anderen Zwecken verwendet werden: die Regeleinrichtung 4 soll verhindern, daß die Versorgungsspannung für den Speicher 1 und die Verarbeitungsschaltung 7 zu hoch wird, was geschehen kann, wenn die Karte zu nahe an eine Sendespule kommt. Der Spannungsbegrenzer in dieser Regelschaltung hat einen gewissen Streubereich, zum Beispiel von 4,5 bis 5,5 V. Falls ein bestimmter Spannungsbegrenzer bei 4,5 V liegt und die Karte in einem Kontaktlesegerät betrieben wird, kann es geschehen, daß eine Versorgungsspannung über den Versorgungsspannungskontakt 21 eingeprägt wird, die größer als diese 4,5 V ist, wodurch der Spannungsregler thermisch gefährdet ist. Mit dem Steuersignal kann der Spannungsbegrenzer um- bzw. abgeschaltet werden.

Der Schalter 10 dient zwar einerseits dazu, den Speicher 1 bei Kontaktbetrieb erst nach einem Steuersignal von dem Mikroprozessor 8 an die Versorgungsspannung VDD anzuschließen, er sorgt andererseits aber auch dafür, daß die Versorgungsspannung, die bei kontaktlosem Betrieb über die Leitung 5 von der Spule 2 an den Speicher 1 und die Verarbeitungsschaltung 7 angelegt wird, nicht zum Mikroprozessor 8 gelangt. Dies hat einerseits den Vorteil, daß der Mikroprozessor 8 nicht über die Spule 2 betrieben werden kann, es hat aber auch den weiteren Vorteil, daß bei kontaktlosem Betrieb ein geringer Energieverbrauch gewährleistet ist. Es kann jedoch durchaus wünschenswert sein, in der Versorgungsspannungsleitung auf dem integrierten Halbleiterchip keinen Schalter zu benötigen, da dieser immer einen Spannungsabfall und damit eine Einschränkung des Versorgungsspannungsbereich bedeutet. So wäre es auch denkbar, den Ausgang des Gleichrichters 3 bzw. der Regelschaltung 4 über die Leitung 5 mit dem Versorgungsspannungskontakt 21 zu verbinden. Da die Stromaufnahme einer Schaltung oft von der Taktfrequenz abhängt, kann man dann dadurch Strom sparen, daß nicht benötigte Teile nicht getaktet werden. Bei kontaktlosem Betrieb liegt kein Taktsignal an den Kontakten an, so daß der Schaltungsteil für den Kontaktbetrieb, insbesondere der Mikroprozessor 8 an Versorgungsspannung liegen kann, ohne wesentlich Strom zu verbrauchen.

## Patentansprüche

1. Chipkarte mit einem zumindest einen Speicher (1) enthaltenden Halbleiterchip,
bei der zur Energieversorgung des Chips und zur bidirektionalen Datenübertragung von und zum Chip sowohl Kontakte (20) als auch Mittel zur kontaktlosen Datenübertragung (2) vorgesehen sind,
wobei auf dem Chip ein ansteuerbares Schaltmittel (9) vorgesehen ist, das den Speicher (1) in Abhängigkeit vom Zustand des Ausgangssignals einer mit zumindest dem Spannungsversorgungs-Kontakt (21) verbundenen logischen Schaltung (8) mit den Kontakten (20) oder mit den Mitteln zur kontaktlosen Datenübertragung (2) verbindet,
**dadurch gekennzeichnet**,
daß das Schaltmittel (9) eine Ruhestellung einnimmt, wenn es nicht angesteuert ist und in dieser Ruhestellung den Speicher (1) mit den Mitteln zur kontaktlosen Datenübertragung (2) verbindet und nur bei Anliegen einer Spannung (VDD) am Versorgungsspannungskontakt (21), angesteuert von der logischen Schaltung (8), die Kontakte (20) mit dem Speicher (1) verbindet.

2. Chipkarte nach Anspruch 1, **dadurch gekennzeichnet**,
daß die logische Schaltung (8) auch mit dem Taktsignalkontakt (23) verbunden ist und das Schaltmittel (9) nur ansteuert, wenn sowohl eine Versorgungsspannung (VDD) als auch ein Taktsignal vorliegt.

3. Chipkarte nach Anspruch 1 oder 2, **dadurch gekennzeichnet**,
daß die logische Schaltung (8) mit einem Mikroprozessor gebildet ist.

4. Chipkarte nach Anspruch 3, **dadurch gekennzeichnet**,
daß nur bei Vorliegen einer Versorgungsspannung (VDD), eines Taktsignals und eines Datensignals an den mit dem Mikroprozessor (8) verbundenen Kontakten (20) das Schaltmittel (9) vom Mikroprozessor (8) angesteuert ist und die Kontakte (20) mit dem Speicher (1) verbindet.

5. Chipkarte nach Anspruch 3 oder 4, **dadurch gekennzeichnet**,
daß der Speicher (1) nur über den Mikroprozessor (8) mit den Kontakten (20) verbindbar ist.

6. Chipkarte nach einem der vorhergehenden Ansprüche, **dadurch gekennzeichnet**,
daß der Speicher (1) nur über einen von der logischen Schaltung (8) ansteuerbaren Schalter (10) mit dem Versorgungsspannungskontakt (21) verbindbar ist.

## Claims

1. Chip card having a semiconductor chip which contains at least one memory (1),
in which card both contacts (20) and means for contactless data transmission (2) are provided for supplying energy to the chip and for bidirectional data transmission from and to the chip,
there being provided on the chip a drivable switching means (9) which, in dependence on the state of the output signal of a logic circuit (8) connected to at least the voltage supply contact (21), connects the memory (1) to the contacts (20) or to the means for contactless data transmission (2),
characterized
in that the switching means (9) assumes a rest position when it is not driven and, in this rest position, connects the memory (1) to the means for contactless data transmission (2), and connects the contacts (20) to the memory (1) only when a voltage (VDD) is present at the supply voltage contact (21), driven by the logic circuit (8).

2. Chip card according to Claim 1, characterized in that the logic circuit (8) is also connected to the clock signal contact (23) and the switching means (9) is driven only if both a supply voltage (VDD) and a clock signal are present.

3. Chip card according to Claim 1 or 2, characterized in that the logic circuit (8) is formed by a microprocessor.

4. Chip card according to Claim 3, characterized in that the switching means (9) is driven by the microprocessor (8) and connects the contacts (20) to the memory (1) only when a supply voltage (VDD), a clock signal and a data signal are present at the contacts (20) connected to the microprocessor (8).

5. Chip card according to Claim 3 or 4, characterized in that the memory (1) is able to be connected to the contacts (20) only via the microprocessor (8).

6. Chip card according to one of the preceding claims, characterized in that the memory (1) is able to be connected to the supply voltage contact (21) only via a switch (10) which can be driven by the logic circuit (8).

## Revendications

1. Carte à puce avec une puce à semiconducteurs contenant au moins une mémoire (1),
dans laquelle sont prévus à la fois des contacts (20) et des moyens de transmission de données sans contact (2) pour permettre l'alimentation en énergie de la puce et la transmission de données bidirectionnelle depuis et vers la puce,
sur la puce étant prévu un dispositif de commutation (9) déclenchable qui relie la mémoire (1), en fonction de l'état du signal de sortie d'un circuit logique (8) relié au moins au contact de tension d'alimentation (21), auxdits contacts (20) ou auxdits moyens de transmission de données sans contact (2),
caractérisée en ce que
le dispositif de commutation (9) prend une position de repos quand il n'est pas déclenché et relie la mémoire (1), dans cette position de repos, aux moyens de transmission de données sans contact (2), et ne relie les contacts (20) à la mémoire (1) qu'à l'application d'une tension (VDD) au contact de tension d'alimentation (21), déclenchée par le circuit logique (8).

2. Carte à puce selon la revendication 1, caractérisée en ce que le circuit logique (8) est relié aussi au contact de signal d'horloge (23) et ne déclenche le dispositif de commutation (9) qu'en présence et d'une tension d'alimentation (VDD) et d'un signal d'horloge.

3. Carte à puce selon la revendication 1 ou 2, caractérisée en ce que le circuit logique (8) est formé par un microprocesseur.

4. Carte à puce selon la revendication 3, caractérisée en ce que le dispositif de commutation (9) n'est déclenché par le microprocesseur (8) et ne relie les contacts (20) à la mémoire (1) qu'en présence d'une tension d'alimentation (VVD), d'un signal d'horloge et d'un signal de données aux contacts (20) reliés au microprocesseur (8).

5. Carte à puce selon la revendication 3 ou 4, caractérisée en ce que la mémoire (1) ne peut être reliée aux contacts (20) que via le microprocesseur (8).

6. Carte à puce selon l'une des revendications précédentes, caractérisée en ce que la mémoire (1) ne peut être reliée au contact de tension d'alimentation (21) que via un commutateur (10) déclenchable par le circuit logique (8).
